# EUROPÄISCHE PATENTANMELDUNG

(11) **EP 1 744 144 A1**
(43) Veröffentlichungstag der Anmeldung: **17.01.2007**
(21) Anmeldenummer: 05015061.4
(22) Anmeldetag: 12.07.2005
(51) Int. Cl.: G01N 15/06

(54) **Verfahren und Einrichtung zur Messung der Belastung einer Atmosphäre mit Aerosolen und Stäuben**

(71) Anmelder: Martechnic GmbH, 22459 Hamburg (DE)
(72) Erfinder: Gutjahr, Jörg, Prof. Dr., 51588 Nümbrecht (DE); Brunk, Henning, Dr., 46519 Alpen (DE)
(74) Vertreter: Meyer, Ludgerus

(57) **Zusammenfassung**

Die Erfindung betrifft ein Verfahren und eine Einrichtung zur Messung der Belastung einer Atmosphäre mit Aerosolen oder Stäuben mit einer einen Laserstrahl erzeugenden Einrichtung (1) an einem ersten Ende einer Messstrecke und einer photoelektrischen Messeinrichtung an einem zweiten Ende der Messstrecke, wobei der Laserstrahl durch die mit Aerosolen oder Stäuben belastete Atmosphäre der Messstrecke geleitet wird, und durch einen in Strahlrichtung des Laserstrahls angeordneten ersten Photosensor (6) die Absorption des Laserstrahls durch die Aerosole oder Stäube erfasst wird. Die Erfindung ist dadurch gekennzeichnet, dass ein außerhalb der Strahlrichtung des Laserstrahls (2) angeordneter zweiter Photosensor (7) gleichzeitig eine durch die Aerosole oder Stäube bewirkte Beugung des Laserstrahls erfasst, und dass aus dem Verhältnis zwischen den Signalen der Sensoren ein Belastungsmaß gebildet wird, das der Belastung der Atmosphäre mit Aerosolen oder Stäuben entspricht.

## Beschreibung

Die Erfindung betrifft ein Verfahren zur Messung der Belastung einer Atmosphäre mit Aerosolen oder Stäuben nach dem Oberbegriff des Anspruchs 1 sowie eine Einrichtung, insbesondere zur Durchführung eines derartigen Verfahrens nach dem Oberbegriff des Anspruchs 4.

Beim Betrieb von Maschinen und Anlagen treten häufig Aerosole oder Stäube auf, die einerseits den Betrieb der Maschinen und Anlagen stören oder schädigen und andererseits gesundheitsschädlich sein können. Hohe Staubkonzentrationen entstehen beispielsweise in der Mühlenindustrie, in Zerkleinerungsanlagen, in Siebanlagen oder auch bei der Produktion bestimmter Güter. Aerosole sind dagegen in Flüssigkeitströpfchen aufgenommene Feststoffe oder auch die Flüssigkeitstropfen selbst. Sie treten beispielsweise als Nebel auf und schweben ähnlich den Stäuben in die Atmosphäre. Soweit die in den Aerosolen und Stäuben vorhandenen Stoffe gesundheitsgefährdend sind, können sie beim Einatmen krankheitsbildend sein. Ab einer bestimmten Konzentration von Aerosolen und Stäuben in einer Atmosphäre ist es auch möglich, dass diese zündfähig werden und bei einer Explosion verheerende Schäden anrichten können. Bei Ölnebeln liegt die Explosionsgrenze z.B. bei etwa 5x10⁹ Tröpfchen/I.

In Kraft-, Arbeits- und Werkzeugmaschinen ist es daher zwingend, das Auftreten von ölnebel festzustellen.

Die Industrie ist daher grundsätzlich bestrebt, das Auftreten von Stäuben und Aerosolen weitest gehend zu verhindern oder soweit zu reduzieren, dass keine Gefährdungen der Gesundheit oder Anlagen und Maschinen auftreten können.

Zur Erfassung der Belastung einer Atmosphäre mit Aerosolen oder Stäuben ist es bekannt, über eine bestimmte Messstrecke die optische Durchlässigkeit der Atmosphäre zu erfassen. Dazu wird in der belasteten Atmosphäre von einem ersten Ende der Messstrecke ein Lichtstrahl an das zweite Ende der Messstrecke gesandt, und es wird dann die mittels einer photoelektrischen Einrichtung erfasste Signalstärke am Ende der Messstrecke in Bezug zur Signalstärke am Ende der Messstrecke bei unbelasteter Atmosphäre gesetzt. Bei langen Messstrecken, insbesondere in der freien Atmosphäre, wird häufig ein Laserstrahl als Lichtstrahl verwendet.

Eine solche Einrichtung ist dann problematisch, wenn das erste und/oder das zweite Ende der Messstrecke im Bereich der belasteten Atmosphäre liegen, denn das Eintritts- und Austrittsende der Messstrecke kann durch die belastete Atmosphäre selbst leicht verschmutzt werden. Dies führt zu fehlerhaften Messergebnissen. Zur Vermeidung von Verschmutzungen der Messeinrichtung ist es daher üblich, die Messeinrichtung regelmäßig zu reinigen oder auf komplizierte Weise zu versuchen, eine Verschmutzung zu vermeiden, beispielsweise durch einen Luftschleier, der die Messeinrichtung von der belasteten Atmosphäre fernhält, durch selbstreinigende Lichteintrittsfenster, wie z. B. schnelldrehende durchlässige Scheiben, und ähnliches.

Zur Konzentrationsbestimmung der Stäube und Aerosole in der Atmosphäre unter Verwendung einer lichtelektrischen Messeinrichtung ist es bekannt, die Reflektion, und die Extinktion des Licht- oder Laserstrahls durch die Stäube oder Aerosole auszuwerten.

Die Erfassung von Größenklassen der Aerosole oder Stäube kann beispielsweise mittels eines Spektrometers, durch Verwendung einer Diffusionsbatterie mit verschiedenen Filterstufen, durch elektrostatische Analysatoren oder auch aerodynamische Partikelgrößenbestimmer erfolgen. Bei dem vorgenannten Verfahren handelt es sich aber um sehr komplexe Verfahren, die in einfachen industriellen Anlagen oder Maschinen zu aufwendig sind.

Eine Verunreinigung von Linsen und Gläsern kann auch durch rechnerische Vergleichsmessungen kompensiert werden. Da es in der Praxis häufig zu Fehlalarmen aufgrund von Verschmutzungen der Messeinrichtung kommt, wird in vielen Fällen die Empfindlichkeit der Messeinrichtung sehr stark reduziert, um die Zahl der Fehlalarme zu verringern. Bei den auf Extinktion beruhenden Messeinrichtungen ist eine Erfassung der Größenklassen der Aerosole und Stäube nicht möglich. Dadurch kann keine Klassifizierung nach Gefährlichkeit der Atmosphärenbelastung oder der Ursache und Wirkung der Gefährdung erfolgen.

Aus der DE 38 38 820 C2 ist ein Verfahren zur Messung der Belastung einer Atmosphäre von Aerosolen bekannt, bei dem ein Laserstrahl verwendet wird, der durch eine Messkammer geführt wird, an deren Ende sich eine photoelektrische Messeinrichtung zur Feststellung der Absorption des Laserstrahls beim Durchgang durch in der Aerosolkammer befindlichen Aerosole befindet. An den Aerosolen abgelenktes Streulicht wird über eine Öffnung der Messkammer auf einen zweiten Sensor geführt, dem über eine verschiebbare Blende abwechselnd auch ein Vergleichsstrahl des Lasers zugeführt wird. Durch eine Intensitätssteuerung von Vergleichsstrahl und Messstrahl erfolgt ein Abgleich des Verfahrens.

Der Nachteil dieser Anordnung liegt insbesondere in der Notwendigkeit der Verwendung einer elektromagnetisch bewegten Blende, was unter rauen Einsatzbedingungen, beispielsweise an Schiffsmaschinen, zu Störungen führen kann. Ferner ergibt sich keine Gleichzeitigkeit der Messung zwischen direktem und gestreutem Strahl, so dass zur Erfassung kurzzeitiger Belastungsänderungen in der Messkammer eine hohe Bewegungsfrequenz der elektromagnetischen Blende erforderlich ist, was die Komplexität, die Empfindlichkeit und die Kosten eines derartigen Verfahrens weiter vergrößert.

Aus der JP 07209169 A sind ein Verfahren und eine Einrichtung zur Messung der räumlichen Verteilung, der Konzentration und der Partikelgröße von strömenden Partikeln bekannt, bei dem ein Laserstrahl zunächst über einen drehenden Reflektorspiegel und dann durch die Messkammer geführt wird. Die Messkammer wird damit in Abhängigkeit von der Drehgeschwindigkeit des Reflektorspiegels nacheinander abgescannt. Mittels eines Mehrfachsensors werden Streulicht und direktes Licht erfasst. Das System erfordert eine aufwendige Steuerung und Synchronisation zwischen Drehspiegel sowie den jeweiligen Sensoren.

Aus der DE 42 28 388 A1 ist eine Vorrichtung zur Bestimmung von Partikelgrößen und/oder Partikelgrößenverteilungen bekannt, bei dem Sensoren zur Erfassung der Beugung eines Laserstrahls verwendet werden, jedoch wird für jede Größenklasse von Partikeln eine unterschiedliche Brennweite verwendet, die wahlweise im Strahlengang des Laserstrahls angeordnet werden kann. In Abhängigkeit von der Brennweite muss der Photodetektor durch einen Stellmotor oder einen Spindelantrieb in eine entsprechend der Brennweite zugehörige Position gefahren werden. Dies bedeutet einen mechanisch erheblichen Aufwand, der bei Einsatz in rauen Umgebungsbedingungen störanfällig ist.

Auch aus der DE 195 10 034 A1 ist eine Vorrichtung zur Bestimmung von Partikelgrößen und/oder Partikelgrößenverteilungen mit einer Laserlichtquelle bekannt, bei dem die Beugung eines Lichtstrahls an Partikeln erfasst wird. Bei dieser Einrichtung können abwechselnd Kollimatorlinsen mit verschiedenen Öffnungsdurchmessern in den Strahlengang gebracht werden, so dass verschiedene Messstrahldurchmesser erzeugt werden können. Auch bei dieser Einrichtung ist eine Fokussierung des aus der Messkammer austretenden Lichtstrahls vorgesehen.

Der Erfindung liegt die Aufgabe zugrunde, ein Verfahren und eine Einrichtung zur Messung der Belastung der Atmosphäre mit Aerosolen oder Stäuben anzugeben, durch das bzw. mit der eine quantitative Erfassung der Stäube oder Aerosole möglich ist, ohne dass Verschmutzungen der Messeinrichtung zu Fehlmessungen führen.

Diese Aufgabe wird durch die in den Ansprüchen 1 und 4 angegebene Erfindung gelöst. Vorteilhafte Weiterbildungen der Erfindung sind in den Unteransprüchen 2 und 3 bzw. 5 bis 11 angegeben.

Das erfindungsgemäße Verfahren zur Messung der Belastung einer Atmosphäre mit Aerosolen oder Stäuben verwendet eine Laserstrahlmesseinrichtung, bei der ein Laserstrahl durch die belastete Atmosphäre geschickt wird. Erfindungsgemäß verwendet die Messeinrichtung zwei Photosensoren, wobei ein erster Photosensor die Abdeckung des Laserstrahls durch die Aerosole oder Stäube erfasst, während ein zweiter außerhalb der Strahlrichtung des Laserstrahls angeordneter Photosensor gleichzeitig die durch die Aerosole oder Stäube bewirkte Beugung des Laserstrahls erfasst, und aus dem Verhältnis zwischen den Signalen der Sensoren ein Belastungsmaß gebildet wird, das der Belastung der Atmosphäre mit Aerosolen oder Stäuben entspricht.

Bei einer solchen Messeinrichtung wird zwar durch Absorption des durch die Messkammer geführten Laserstrahls ebenfalls die Stärke des auf den Photosensor unmittelbar auftreffenden Laserlichts verringert, und zwar um so stärker, je mehr Aerosole und Stäube sich in der Messkammer im Laserstrahl befinden, jedoch wird das Laserlicht ebenfalls an den Aerosolen und Stäuben gebeugt, und zwar um so stärker, je mehr Aerosole und Stäube sich in der Messkammer im Laserstrahl befinden. Das Verhältnis zwischen Absorption des Laserlichts und Beugung des Laserlichts ändert sich daher in Abhängigkeit vom Grad der Belastung der Atmosphäre. Dagegen bleibt das Verhältnis zwischen Absorption und Beugung unabhängig vom Verschmutzungsgrad der Ein- und Austrittsflächen der Messkammer im Wesentlichen konstant. Bei höherer Verschmutzung der Ein- und Austrittsflächen wird lediglich die Intensität beider Signale vermindert. Die erhaltenen Messergebnisse sind daher unabhängig von der Verschmutzung der Ein- und Austrittsflächen der Messkammer.

Die geometrischen Verhältnisse der Messkammer werden vorzugsweise so ausgestaltet, dass die radiale Größe des ersten Photosensors so gewählt wird, dass die Querschnittsfläche des Laserstrahls im wesentlichen vollständig erfasst wird und dass der zweite Photosensor, der den ersten Sensor ringförmig umgibt, in einem solchen radialen Abstand vom Mittelpunkt des ersten Photosensors angeordnet ist, dass von dem zweiten Photosensor die Beugung des Laserlichts an Aerosolen oder Stäuben einer bestimmten Größenklasse erfasst wird.

Die in der Messkammer vorhandenen Aerosole oder Stäube bewirken, je nach ihrer Größe, eine bestimmte Winkelbeugung. Diese Beugung führt zu einer ringförmigen Ausbildung einer Auftrefffläche des Laserstrahls auf den Photosensor, deren Radius von der Größenklasse der Aerosole oder Stäube abhängt. Der zweite Photosensor wird daher insbesondere in einem Abstand vom Zentrum des Laserstrahls angeordnet, der für die Erfassung einer gewünschten Größenklasse der Aerosole oder Stäube angepasst ist. Insbesondere ist der zweite Photosensor in einem solchen Abstand vom Laserstrahlzentrum angeordnet, dass Aerosole oder Stäube mit einer Größe von ca. 2 bis 6 µ, vorzugsweise etwa 4 µ, erfasst werden.

Eine erfindungsgemäße Einrichtung verwendet insbesondere zwei Photosensoren, von denen ein erster Photosensor in Strahlrichtung des Laserstrahls außerhalb der Messkammer angeordnet ist und ein zweiter, ebenfalls außerhalb der Messkammer angeordneter Photosensor zur gleichzeitigen Erfassung der durch die Aerosole oder Stäube bewirkten Beugung des Laserstrahls ausgebildet ist. Die Photosensoren sind insbesondere Photodioden, die konzentrisch zueinander angeordnet sind.

Die Messkammer weist Ein- und Austrittsflächen für den Laserstrahl auf, und ist beispielsweise als rohrförmige Kammer ausgebildet, bei der der Laserstrahl das Messrohr in Querrichtung durchstrahlt.

Vorzugsweise ist die Einrichtung zur Erzeugung eines Laserstrahls eine Laserdiode, deren Frontfläche die Eintrittsfläche des Laserstrahls in die Messkammer bildet. Die verwendeten Photodioden sind ebenfalls vorzugsweise unmittelbar an der Messkammerwand angeordnet, wobei die Photodioden durch eine Abdeckung in einem geeigneten Abstand vom Inneren der Messkammer angeordnet sind.

In weiteren Ausführungsformen kann vorgesehen sein, dass die photoelektrische Messeinrichtung ein oder mehrere weitere äußere Ringdioden zur Erfassung zusätzlicher Größenklassen von Aerosolen oder Stäuben enthält. Je nach Anwendungsfall kann es in manchen Fällen erwünscht sein, eine Feststellung über die Häufigkeit von Aerosolen oder Stäuben in bestimmten Größenklassen zu treffen. Dies ist durch konzentrische Anordnung mehrerer Ringdioden möglich.

Zur Auswertung der Signale der Photodioden ist vorzugsweise eine Auswerteeinrichtung vorgesehen, die die Verhältnisse der Signale der Photodioden zueinander errechnet und daraus ein Ergebnissignal zur Anzeige der Belastung der Atmosphäre mit Aerosolen oder Stäuben einer bestimmten Größenklasse ableitet.

Die Erfindung wird nachstehend anhand eines Ausführungsbeispiels näher erläutert.
Es zeigen:
- Fig. 1: eine perspektivische Prinzipansicht einer Messeinrichtung nach der Erfindung.
- Fig. 2: eine grafische Darstellung zur Erläuterung des Messprinzips.

In einem Ausführungsbeispiel der Erfindung wird die erfindungsgemäße Messeinrichtung in einem Groß-Dieselmotor verwendet, bei der festzustellen ist, ob sich in der im Inneren der Maschine befindlichen Atmosphäre eine erhöhte Ölnebel-Konzentration ausbildet. Der Ölnebel entsteht bei sich anbahnenden Reibschäden z.B. in Lagern. Wenn eine zu hohe Ölnebel-Konzentration festgestellt wird, und dieser Anstieg rechtzeitig detektiert werden kann, können solche Maschinen in vielen Fällen repariert oder gewartet werden, bevor ein nicht reparabler Maschinenschaden auftritt. Bei Fortschreiten des Schadenbildes und weiterer ölnebelentwicklung wird eine Ölnebelkonzentration erreicht, bei welcher es zur Entzündung und Explosion kommen kann. Dies führt meist zum Totalschaden des Dieselmotors.

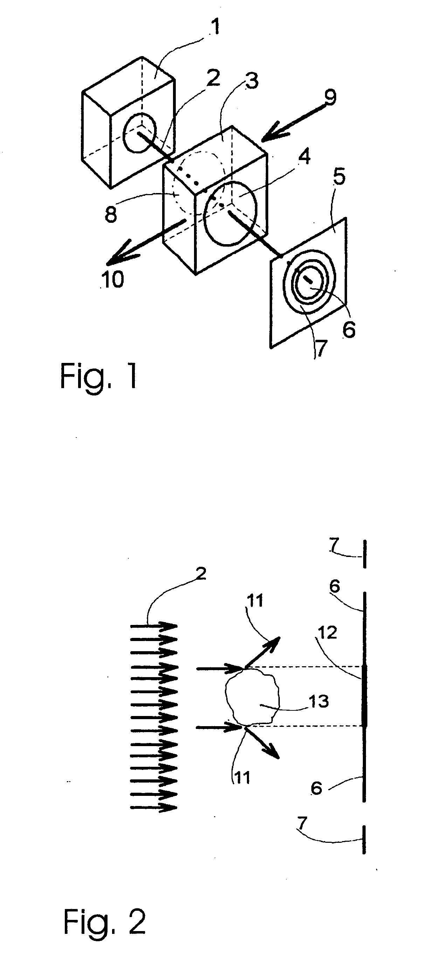

Fig. 1 zeigt eine perspektivische und vereinfachte Messeinrichtung, die einen Laserstrahlsender 1, beispielsweise eine Laserdiode enthält, die einen Laserstrahl 2 aussendet. Dieser durchläuft die Messkammer 3 in Richtung auf den Laserstrahlempfänger 5, der aus einer inneren kreisförmigen Diode 6 und einer die innere Diode umschließenden Ringdiode 7 gebildet ist. Die Messkammer 3 enthält eine seitliche Eintrittsöffnung 8 sowie eine seitliche Austrittsöffnung 4, die für den Laserstrahl durchlässig sind. Die Messkammer wird quer zum Laserstrahl von einer belasteten Atmosphäre durchströmt, die in Fig. 1 durch einen eintretenden Ölnebel 9 und einen austretenden Ölnebel 10 angedeutet ist.

Die Messkammer kann zwar prinzipiell die dargestellte Form aufweisen, jedoch ist bevorzugt, dass die Messkammer ein einfaches durchsichtiges Messrohr aus Glas bildet, durch das die belastete Atmosphäre oder ein Teil der Atmosphäre hindurchgeführt wird. Der Durchmesser der Messkammer beträgt nur wenige Millimeter bis Zentimeter. Bei geringen Verschmutzungen der Atmosphäre kann der Querschnitt der Messkammer auch zur Erhöhung der Empfindlichkeit vergrößert werden.

Sofern die Messkammer nicht vollständig aus Glas besteht, können die Ein- und Austrittsöffnungen 4 und 8 als Glasfenster gebildet sein. Der Laserstrahlsender ist vorzugsweise unmittelbar an die Eintrittsöffnung 8 der Messkammer 3 angekoppelt, beispielsweise indem eine Laserdiode an der Außenseite der Messkammer angebracht ist.

Der Laserstrahlempfänger 5 kann ebenfalls an der Außenseite der Messkammer 3 angebracht werden, wobei der Abstand des Laserstrahlempfängers von der Messkammer einerseits durch die Größe der Messkammer, andererseits durch die Größe der Dioden 6 und 7 sowie der zu erfassenden Partikelklassifikation abhängt. Vorzugsweise wird der Laserstrahlempfänger in einem bestimmten Abstand unmittelbar an die Austrittsöffnung 4 der Messkammer 3 angekoppelt.

Fig. 2 zeigt das Messprinzip der Erfindung. Ein Laserstrahl 2, dessen Durchmesser in etwa dem Durchmesser der inneren Diode 6 des Laserstrahlempfängers 5 entspricht, trifft zum Teil auf die Oberfläche eines Partikels 13 in einer die Messkammer 3 durchströmenden Atmosphäre. Der unmittelbar auf das Partikel 13 treffende Laserstrahlteil wird an der Oberfläche des Partikels 13 absorbiert oder reflektiert und gebrochen, so dass das auf die Fotodiode 6 auftreffende Signal aufgrund des Vorhandenseins des Partikels 13 verkleinert wird. Die geringe Größe der zu erfassenden Aerosole oder Stäube in der Messkammer führt jedoch ferner zur Beugung des auf die Partikel auftreffenden Laserstrahls, so dass sich ein Beugungsstrahl 11 ergibt, der in einem radialen Winkel außerhalb der zentralen Laserdiode 6 auf die Ringdiode 7 auftrifft. Die Größe der Teilchen und die Wellenlänge des Laserlichts bestimmen dabei den Winkel der Ablenkung. Die Größenverhältnisse von innerer Diode 6 und Ringdiode 7 sind insbesondere so gewählt, dass die durch Beugung hervorgerufene Strahlung von Partikelgrößen von etwa 4 µ auf die Ringdiode 7 trifft. Bei einer mit Ölnebel belasteten Atmosphäre ergibt sich dadurch ein durch Absorption geschwächter Laserstrahl auf der inneren Diode 6 sowie ein durch Beugung hervorgerufener ringförmiger Strahl 11 auf der Ringdiode 7.

Das auf die innere Diode 6 auftreffende Laserlicht verringert sich durch Absorption umso stärker, je mehr Aerosole und Stäube sich in der Messkammer im Laserlicht befinden. Umgekehrt wird der Ringstrahl 11, der durch Beugung an den Aerosolen und Stäuben hervorgerufen wird, umso stärker, je mehr Aerosole und Stäube sich in der Messkammer im Laserstrahl befinden.

Die Laserdioden 6 und 7 sind an eine geeignete Auswerteschaltung angeschlossen, die die Signale der Laserdioden 6 und 7 in ein Verhältnis zueinander setzt. Der Quotient aus I_{R} / I₀ ist bei belasteter Atmosphäre größer 0, wobei I_{R} dem Signal der Ringdiode 7 und I₀ dem Signal der inneren Diode 6 entspricht. Bei unbelasteter Atmosphäre ist der Quotient daher gleich 0, während er in Abhängigkeit von der Belastung der Atmosphäre einen Wert größer 0 annimmt.

Bei einer möglichen Verschmutzung der Ein- und Austrittsöffnungen der Messkammer wird zwar das auf die Dioden auftreffende Laserlicht insgesamt abgeschwächt, jedoch bleibt das Verhältnis der Signale der inneren und äußeren Diode zueinander bei verschmutzten Ein- und Austrittsflächen nahezu konstant, wenn die Teilchendichte konstant ist. Daher haben Verschmutzungen der Ein- und Austrittsflächen der Messkammer keinen Einfluss auf das Messergebnis, solange noch ein auswertbarer Signalpegel an den Dioden 6 und 7 auftritt. Besondere Verfahren zu Reinigung und Reinhaltung der optischen Oberflächen der Messkammer sind nicht erforderlich. Die Reinigung kann entweder vollständig entfallen oder der Zeitabstand zwischen zwei Reinigungen kann sehr groß gewählt werden. Ferner weist die Erfindung den Vorteil auf, dass die Empfindlichkeit der Messeinrichtung sehr hoch eingestellt werden kann.

Die Leistung der Laserdiode beträgt nur wenige mW, der äußere Durchmesser der inneren Diode liegt bei 2-3 mm und der mittlere Durchmesser der Ringdiode beträgt etwa 12 mm. Als Messstrecke ist eine Länge von etwa 1-2 cm ausreichend.

Zur Anpassung an die jeweilige Messaufgabe können die geometrischen Verhältnisse der Messeinrichtung in verschiedener Weise variiert werden. So können die Durchmesser der inneren Diode und/oder der Ringdiode verändert werden oder es kann der Abstand des Laserstrahlempfängers von der Messkammer variiert werden. Ferner lassen sich die Breite der Messkammer, der Abstand der Ein- und Austrittsöffnungen zur Messkammer, die Leistung der Laserdiode usw. variieren.

Die Erfindung ermöglicht es einerseits, die Messaufgabe unabhängig von Verschmutzungen der Ein- und Austrittsflächen der Messkammer zu erfüllen und andererseits eine Größenklassifikation der erfassten Aerosole und Stäube vorzunehmen. Der Einsatz der Erfindung ist nicht auf Maschinen beschränkt. Es ist auch eine Überwachung von Maschinenhallen, landwirtschaftlichen Betrieben, Bauindustrie etc. möglich. Ferner kann die Erfindung bei Anpassung der geometrischen Ausgestaltung zur Feststellung von Nebel oder Dunst in der freien Atmosphäre verwendet werden.

### Bezugszeichen

1 Laserstrahl-Sender
2 Laserstrahl
3 Messkammer
4 Austrittsöffnung
5 Laserstrahlempfänger
6 innere Fotodiode
7 äußere Fotodiode
8 Eintrittsöffnung
9 eintretender Ölnebel
10 austretender Ölnebel
11 Beugestrahl
12 zentrale Auftrittsfläche
13 Partikel

## Patentansprüche

1. Verfahren zur Messung der Belastung einer Atmosphäre mit Aerosolen oder Stäuben in einer Messkammer bestimmter Breite mit einer einen Laserstrahl erzeugenden Einrichtung (1) an einem ersten Ende einer Messstrecke und einer photoelektrischen Messeinrichtung (5) an einem zweiten Ende der Messstrecke, wobei der Laserstrahl in Richtung der Breite der mit Aerosolen oder Stäuben belasteten Messkammer durch die Messstrecke geleitet wird, und wobei durch einen in Strahlrichtung des Laserstrahls angeordneten ersten Photosensor (6) die Absorption des Laserstrahls durch die Aerosole oder Stäube erfasst wird, **dadurch gekennzeichnet, dass** durch einen außerhalb der Strahlrichtung des Laserstrahls (2) angeordneten zweiten Photosensor (7) gleichzeitig eine durch die Aerosole oder Stäube bewirkte Beugung des Laserstrahls erfasst wird, und dass aus dem Verhältnis zwischen den Signalen der Sensoren ein Belastungsmaß gebildet wird, das der Belastung der Atmosphäre mit Aerosolen oder Stäuben entspricht.

2. Verfahren nach Anspruch 1, **dadurch gekennzeichnet, dass** die radiale Größe des ersten Photosensors (6) so gewählt ist, das die Querschnittsfläche des Laserstrahls im wesentlichen vollständig erfasst ist und dass der zweite PhotoSensor (7), der den ersten Sensor ringförmig umgibt, in einem solchen radialen Abstand vom Mittelpunkt des ersten Photosensors angeordnet ist, dass von dem zweiten Photosensor die Beugung des Laserlichts an Aerosolen oder Stäuben einer bestimmten Größenklasse erfasst wird.

3. Verfahren nach Anspruch 2, **dadurch gekennzeichnet, dass** der zweite Photosensor die Beugung des Laserlichts von Aerosolen oder Stäuben mit einer Größe von 2 - 6 µ , vorzugsweise etwa 4 µ, erfasst.

4. Einrichtung zur Messung der Belastung einer Atmosphäre mit Aerosolen oder Stäuben in einer Messkammer bestimmter Breite mit einer einen Laserstrahl (2) erzeugenden Einrichtung (1) an einem ersten Ende der Messtrecke und einer photoelektrischen Messeinrichtung (5) an einem zweiten Ende der Messtrecke, wobei der Laserstrahl (2) in Richtung der Breite der mit Aerosolen oder Stäuben belasteten Messkammer durch die Messstrecke geleitet wird, und wobei die photoelektrische Messeinrichtung einen in Strahlrichtung des Laserstrahls angeordneten ersten Photosensor (6) zur Erfassung der Strahlstärke des Laserstrahls am Ende der Messstrecke enthält, insbesondere zur Durchführung eines Verfahrens nach den Ansprüche 1 - 4, **dadurch gekennzeichnet, dass** außerhalb der Strahlrichtung des Laserstrahls ein zweiter Photosensor (7) zur gleichzeitigen Erfassung der durch die Aerosole oder Stäube (13) bewirkten Beugung des Laserstrahls vorgesehen ist.

5. Einrichtung nach Anspruch 4, **dadurch gekennzeichnet, dass** der zweite Photosensor den ersten Photosensor ringförmig umgibt.

6. Einrichtung nach Anspruch 4, **dadurch gekennzeichnet, dass** mehrere Photosensoren um den ersten Photosensor herum angeordnet sind.

7. Einrichtung nach Anspruch 5 oder 6, **dadurch gekennzeichnet, dass** die Sensoren Photodioden sind.

8. Einrichtung nach Anspruch 4, **dadurch gekennzeichnet, dass** die Einrichtung (1) zur Erzeugung eines Laserstrahls eine Laserdiode ist und dass die Frontfläche der Laserdiode die Eintrittsfläche des Laserstrahls in die Messkammer (3) bildet.

9. Einrichtung nach Anspruch 8, **dadurch gekennzeichnet, dass** die photoelektrische Messeinrichtung eine für den Laserstrahl durchlässige Abdeckung aufweist, die die Austrittsfläche der Messkammer bildet.

10. Einrichtung nach Anspruch 5 oder 6, **dadurch gekennzeichnet, dass** die photoelektrische Messeinrichtung eine oder mehrere weitere äußeren ringförmige Photosensoren oder weitere Photosensoren mit unterschiedlichem Abstand zum ersten Photosensor zur Erfassung zusätzlicher Größenklassen von Aerosolen oder Stäuben enthält.

11. Einrichtung nach einem der Ansprüche 5 - 11, **dadurch gekennzeichnet, dass** eine Auswerteeinrichtung vorgesehen ist, der die Signale der Photodioden zugeführt werden, und dass das Verhältnis der Signale zueinander errechnet und daraus ein Ergebnissignal zur Anzeige der Belastung der Atmosphäre mit Aerosolen oder Stäuben einer bestimmten Größenklasse abgeleitet wird.
